# EUROPEAN PATENT APPLICATION

(11) **EP 4 174 517 A1**
(43) Date of publication of application: **03.05.2023**
(21) Application number: 21205459.7
(22) Date of filing: 29.10.2021
(51) Int. Cl.: G01S 7/41, G01S 13/931, G01S 7/40, G06N 3/08

(54) **DOMAIN ADAPTATION OF AUTONOMOUS VEHICLE SENSOR DATA**

(71) Applicant: GM Cruise Holdings LLC, San Francisco CA 94103 (US)
(72) Inventor: KUSCHK, Georg, 82467 Garmisch-Partenkirchen (DE); MEYER, Michael, 81539 München (DE)
(74) Representative: Berkenbrink, Kai-Oliver

(57) **Abstract**

The technologies described herein relate to a domain adaptation system for sensor data. A computer-implemented model is trained using a set of training sensor data to facilitate classification of objects that are in the vicinity of an autonomous vehicle (AV). The set of training data corresponds to a first domain, such as firmware version of a sensor system, model of a sensor system, position of the sensor system on a vehicle, an environmental condition, etc. The set of training data is generated based upon pre-existing training data that corresponds to a second domain that is different from the first domain. Put differently, the pre-existing training data is transformed to correspond to the domain of a sensor system as it will be used on the AV.

## Description

### BACKGROUND

In connection with navigating an environment, an autonomous vehicle (AV) perceives objects surrounding the AV based upon sensor signals generated by sensor systems of the AV. For example, the AV may include cameras, a lidar sensor system, a radar sensor system, etc., where a centralized processing device receives data based upon sensor signals generated by such sensor systems and performs a variety of different subtasks, such as free space detection, scene classification, and detection and tracking of other vehicles and pedestrians.

Conventionally, radar systems are configured to construct a three-dimensional point cloud and transmit the point cloud to a centralized data processing device of the AV, such as a graphics processing unit (GPU). The centralized data processing device executes computer-implemented instructions based upon the three-dimensional point cloud in connection with performing a subtask related to autonomous navigation (such as one or more of the subtasks referenced above). In an example, the centralized data processing device executes a computer-implemented model, such as a deep neural network (DNN), where the three-dimensional point cloud generated by the radar system is provided as input to the computer-implemented model, and the computer-implemented model generates output based upon the three-dimensional point cloud. The centralized processing device assigns a label to an object (such as a pedestrian or other vehicle) represented in the three-dimensional point cloud based upon the output of the computer-implemented model.

Training of the computer-implemented model requires a large amount of training data, where typically the training data corresponds to a specific domain, where the domain includes one or more of model of a sensor system used to generate sensor data, firmware version of the sensor system, position of the sensor system on an AV, orientation of the sensor system relative to ground, environment of the sensor system, operating mode of the sensor system, etc. When a change is made to the domain of a sensor system on the AV (such as when the sensor system on the AV is replaced with an updated model of the sensor system), the computer-implemented model may need to be retrained with training data that corresponds to the updated domain. In an example, radar data generated by a first radar system of a scene may differ from radar data generated by a second radar system of the same scene due to the two radar systems having different firmware, and thus a computer-implemented model that has been trained to generate output based upon radar data generated by the first radar system will operate suboptimally when provided with radar data generated by the second radar system. Hence, performance of the computer-implemented model when performing one or more subtasks is dependent upon the training data employed to train the computer-implemented model. Collecting sufficient training data to allow for the computer-implemented model to generate output with sufficient accuracy is a time-consuming and labor-intensive task. If a sufficient amount of training data is not collected, a computer-implemented model trained based upon such training data may perform sub-optimally in some situations.

### SUMMARY

The following is a brief summary of subject matter that is described in greater detail herein. This summary is not intended to be limiting as to scope of the claims.

Various technologies relating to a system that is configured to generate training data for use in connection with training a computer-implemented model employed to perform a subtask of autonomous navigation are described herein. Autonomous vehicles (AVs) include computing systems that execute computer-implemened models, such as deep neural networks (DNNs), to perform autonomous navigation subtasks. These subtasks include object detection, object classification, and object tracking. Training a computer-implemented model to perform an autonomous navigation subtask based upon received sensor data requires a large amount of training data; when there is a change made to an AV, such as incorporating a new model of a sensor, installing new firmware in a sensor, altering position of a sensor, etc., additional training data needs to be acquired to update the computer-implemented model to account for such change.

The technologies described herein relate to generating training data for training a computer-implemented model that is configured for use in an AV. Pursuant to an example, an autoencoder is trained based upon a relatively small amount of sensor data (referred to herein as seed sensor data) that corresponds to a desired domain, where a domain may be one or more of a weather condition, a position of a sensor on an AV, a model of a sensor system, a firmware version of a sensor system, a mode of operation of a sensor system, etc. Put differently, the autoencoder is trained to learn a mapping between a first domain (a domain of pre-existing training data) and a second domain (the desired domain). Once the autoencoder has been trained, the autoencoder is provided with the pre-existing training data as input, and the autoencoder outputs updated training data that corresponds to the pre-existing training data but, instead of being associated with the first domain, is associated with the second domain. Hence, when a change is made to a sensor system of an AV, rather than having to generate training data by mounting the sensor system to a vehicle and collecting a large volume of data from the sensor as the vehicle travels, training data is generated based upon pre-existing training data and a relatively small amount of data collected from the sensor system.

Upon the training data being generated, the computer-implemented model is trained based upon the training data, such that the computer-implemented model is well-suited for receiving sensor data and performing an autonomous navigation subtask based upon the received sensor data (where the received sensor data corresponds to the second domain). The AV autonomously navigates based upon output of the computer-implemented model.

The above summary presents a simplified summary in order to provide a basic understanding of some aspects of the systems and/or methods discussed herein. This summary is not an extensive overview of the systems and/or methods discussed herein. It is not intended to identify key/critical elements or to delineate the scope of such systems and/or methods. Its sole purpose is to present some concepts in a simplified form as a prelude to the more detailed description that is presented later.

### BRIEF DESCRIPTION OF THE DRAWINGS

Fig. 1 is a functional block diagram of a computing system that is configured to generate training data for training a computer-implemented model that is configured for use in an autonomous vehicle (AV).
Fig. 2 is a schematic that illustrates an exemplary AV that includes a radar system and a processing system.
Fig. 3 is a schematic of an exemplary autoencoder that performs domain adaptation of sensor data.
Fig. 4 is a flow diagram illustrating an exemplary methodology for training a computer-implemented model that is configured for use in an AV.
Fig. 5 is an example computing system.

### DETAILED DESCRIPTION

Various technologies pertaining to the processing of sensor data in an autonomous vehicle (AV) are now described with reference to the drawings, where like reference numerals are used to refer to like elements throughout. In the following description, for purposes of explanation, numerous specific details are set forth in order to provide a thorough understanding of one or more aspects. It may be evident, however, that such aspect(s) may be practiced without these specific details. In other instances, well-known structures and devices are shown in block diagram form in order to facilitate describing one or more aspects. Further, it is to be understood that functionality that is described as being carried out by certain system modules may be performed by multiple modules. Similarly, for instance, a module may be configured to perform functionality that is described as being carried out by multiple modules.

Moreover, the term "or" is intended to mean an inclusive "or" rather than an exclusive "or." That is, unless specified otherwise, or clear from the context, the phrase "X employs A or B" is intended to mean any of the natural inclusive permutations. That is, the phrase "X employs A or B" is satisfied by any of the following instances: X employs A; X employs B; or X employs both A and B. In addition, the articles "a" and "an" as used in this application and the appended claims should generally be construed to mean "one or more" unless specified otherwise or clear from the context to be directed to a singular form.

Described herein are various technologies pertaining to a domain adaptation system for sensor data in an AV. A computer-implemented model, such as deep neural network (DNN), can be trained using sensor data to facilitate detection, classification, and tracking of objects that are in the vicinity of the AV. The trained computer-implemented model can be sensitive to the domain of the sensor data, and if there is a domain gap between current sensor data and the sensor data upon which the computer-implemented model was trained, the computer-implemented model may perform suboptimally when detecting, classifying, and/or tracking objects. Pursuant to an example, a computer-implemented model may be trained based upon sensor data generated by a first model of a radar system, where an AV includes: 1) the first model of the radar system; and 2) a computing system that executes the computer-implemented model, wherein the computer-implemented model performs a subtask based upon sensor data generated by the first model of the radar system. The AV may be updated, such that the first model of the radar system is replaced with a (new) second model of the radar system; however, the second model of the radar system may generate radar data slightly differently from the first model of the radar system. Further, because the second model of the radar system is new, there may be a relatively small amount of training data available for retraining the computer-implemented model.

The technologies described herein relate to generating training data for use in training a computer-implemented model that is employed in an AV, wherein the AV autonomously navigates about a region based upon output of the computer-implemented model, and further wherein the computer-implemented model generates the output based upon sensor data generated by a sensor system of the AV. As will be described in detail herein, generating the training data includes receiving a first set of sensor data and performing a transformation operation on the first set of sensor data to generate a second set of sensor data, where the second set of sensor data is the training data that is to be used to train a computer-implemented model. The transformation operation is based upon seed sensor data, such that the second set of sensor data corresponds to the same domain as the seed sensor data. In an example, the first set of sensor data can be radar data generated by the first model of the radar system, and the seed sensor data can be radar data generated by the second model of the radar system. The technologies described herein relate to using the seed sensor data to transform the (volumous) first set of sensor data to the second set of radar data, where the second set of sensor data appears to have been generated by the second model of the sensor system.

Put more generally, the technologies described herein relate to transforming sensor data from corresponding to one domain to corresponding to another domain. A domain may be a sensor mode, a model of a sensor system, a position of the sensor system on an AV, an orientation of a sensor system on an AV, a firmware version of a sensor system, a weather condition, etc. Thus, in examples: a) first sensor data that corresponds to a first sensor mode is transformed to second sensor data that corresponds to a second sensor mode; b) first sensor data that corresponds a first model of a sensor system is transformed to second sensor data that corresponds to a second model of a sensoe system; c) first sensor data generated by a sensor system positioned at a first position on an AV (e.g., a first distance above ground) is transformed to second sensor data that corresponds to a sensor system positioned at a second position on the AV (e.g., a second distance above ground); d) first sensor data generated by a sensor system on an AV pointed at a first orientation relative to ground is transformed to second sensor data that corresponds to a sensor system on an AV pointed at a second orientation relative to ground; e) first sensor data generated by a sensor system having a first firmware version is transformed to second second sensor data corresponding to a sensor system having a second firmware version; f) first sensor data generated by a sensor system in a first weather condition (e.g., rain) is transformed to second sensor data that corresponds to a second weather condition (e.g., sunny), etc.

Moreover, it is noted that the technologies described herein are well-suited for transforming sensor data generated in simulation environments to sensor data that corresponds to a particular domain. Specifically, computer-implemented simulations of a radar system can be undertaken to generate a relatively large volume of first radar data. In such a case, the simulation environment is the first domain. Subsequently, the first radar data can be transformed into second radar data that corresponds to a second domain (e.g., a particular model of a radar system, a particular radar mode, a particular position on an autonomous vehicle, combinations thereof, etc.), where a relatively small amount of seed sensor data that corresponds to the second domain is used to learn a mapping between the first domain and the second domain.

In an embodiment, an autoencoder can be employed to transform first sensor data associated with a first domain to second sensor data associated with a second domain. The autoencoder is trained to learn a mapping between the first domain and the second domain based upon the seed sensor data, which is sensor data generated by a sensor system in associated with the second domain, and a corresponding portion of sensor data associated with the first domain. As an example, the seed sensor data can correspond to a portion of the original sensor data to facilitate the transformation. For instance, the seed sensor data can include information about one or more objects present in the original sensor data, and the autoencoder can be trained to learn a mapping between seed sensor data and the portion of the original sensor data, and therefore learn a mapping between the first domain and the second domain.

As noted above, the first sensor data gathered by a sensor system may be dependent upon the weather and other environmental conditions under which the sensor data is gathered. For example, rain, humidity, different temperatures, wind conditions, may affect the sensor data collected. Similarly, different road styles (concrete, asphalt, etc), road configurations, building materials, signage, and other environmental factors can also change how the sensor data appears, and the computer-implemented model can be trained on sensor data collected under each of these environmental conditions. To collect the sensor data, however, can be a lengthy and time-intensive process.

The domain adaptation system disclosed herein reduces the time required to collect sensor data, as the second sensor data is generated based on a relatively small amount of seed sensor data corresponding to each of the different domains. The seed sensor data can be a small portion of the overall sensor data used to train the computer-implemented model, and the autoencoder can then transform the first (full) set of sensor data into the second sensor data that is associated with the domain of the seed sensor data. The computer-implemented model can be trained on each of the sets of second sensor data so that the computer-implemented model can generalize well across several different domains.

As noted above, in addition to environmental conditions, other factors can also contribute to the domain gap in sensor data. These factors can include the radar mode that a radar system is operating in (short/long, etc.), the firmware version the radar system is operating on, model of the radar system, the geographical distribution (e.g., geographic location where the radar system is operating), the mounting position (roof of the car, bumper, etc), and other factors.

Once the computer-implemented model is trained, the computer-implemented model can be instantiated on a centralized data processing system on an AV, and the computer-implemented model can perform an autonomous navigation subtask (such as object detection, classification, and/or tracking) using the sensor data generated by the sensor system of the AV. The centralized data processing system can control the AV to perform a driving maneuver based upon the subtask performed by the computer-implemented model. For example, the output of the computer-implemented model may indicate the existence of a particular type of object in proximity to the AV (as well as velocity of such object relative to the AV), such as a pedestrian, a bicyclist, another vehicle, etc. The driving maneuver can be a braking of the AV, a swerve, acceleration, deceleration, or other suitable driving maneuver.

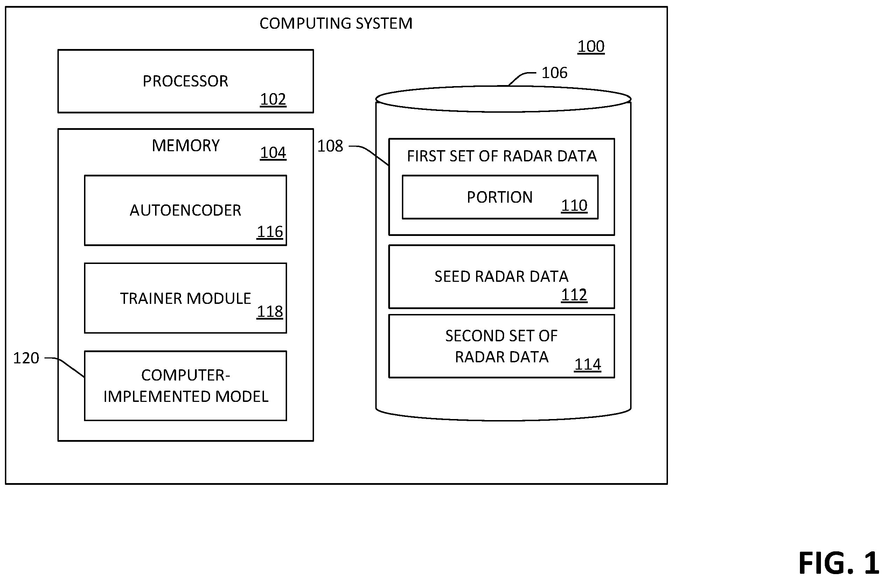

Referring now to Fig. 1, a computing system 100 that is configured to generate training data for training a computer-implemented model is illustrated, where the computer-implemented model is executed by a computing system of an AV and is configured to perform a subtask related to autonomous navigation, such as object detection, object classification, object tracking, etc. The computing system 100 includes a processor 102 and memory 104, where the memory 104 includes instructions that are executed by the processor 102. The computing system 100 also includes a data store 106 that includes data that can be retrieved from the data store 106 and placed into the memory 104. More specifically, the data store 106 includes a first set of radar data 108. The first set of radar data 108 is radar data associated with a first domain, where the first domain can be one of the domains referenced above or a combination of such domains. The first set of radar data 108 includes a portion 110, where the portion 110 can include radar data for a particular scene, for a particular object, etc.

The data store 106 also includes seed radar data 112, where the seed radar data 112 is associated with a second domain, and further where the second domain can be one of the domains referenced above or a combination of such domains. It is noted that the second domain is different from the first domain. Therefore, if the first domain is a first model of a radar system, the second domain may be a second (updated) model of the radar system. In another example, if the first domain is a simulation environment, the second domain may be a particular model of a real-world radar system. Other examples will be readily contemplated. The seed radar data 112 corresponds to the portion 110 of the first set of radar data 108, in that the seed radar data 112 can include radar data of the same scene as the portion 110 of the first set of radar data 108, may include radar data for the same object or objects represented in the portion 110 of the first set of radar data 108, etc. The data store 106 also includes a second set of radar data 114, where the second set of radar data 114 is associated with the second domain and is generated based upon the first set of radar data 108 and the seed radar data 112, as will be described in greater detail below.

The memory 104 includes an autoencoder 116. The autoencoder 116 performs domain adaptation on the first set of radar data 108 to transform the first set of radar data 108 (associated with the first domain) to the second set of radar data 114 (associated with the second domain). The autoencoder 116 is trained based upon the portion 110 of the first set of radar data 108 and the seed radar data 112, such that mappings between the portion 110 of the first set of radar data 108 and the seed radar data 112 can be represented in the autoencoder 116. As will be illustrated herein, the autoencoder 116 includes an encoder, a decoder, and "code", where the encoder maps input into the code, and the docoder maps to the code to a reconstruction of the input (where the reconstruction of the input corresponds to the second domain).

Upon being trained, the autoencoder 116 is provided with the first set of radar data 108 as input, and the autoencoder 116 generates the second set of radar data 114 as output, where the second set of radar data is associated with the second domain. From the foregoing, it can be ascertained that the autoencoder 116 can be employed to generate a relatively large amount of radar data that is associated with the second domain. In addition, the memory 104 may include multiple different autoencoders, where each of the autoencoders is configured to transform radar data from one domain to another. Further, multiple autoencoders can be "stacked" upon one another, such that output of one autoencoder is input to another autoencoder. In an example, a first autoencoder is configured to transform radar data from a first domain to a second domain, and a second autotencoder is configured to transform radar data from the second domain to a third domain. The first and second autoencoders can be stacked, such that radar data is transformed from the first domain to the third domain by way of the two autoencoders. The use of multiple different autoencoders, potentially stacked with respect to one another, enables generation of a significant amount of training data across several different domains, including the second set of radar data 114.

The memory 104 further includes a trainer module 118 and a computer-implemented model 120. The trainer module 118 receives the second set of radar data 114 and trains the computer-implemented model 120 based upon the second set of radar data 114. In an example, the computer-implemented model 120 is a DNN, and the trainer module 118 learns matrices of weights to assign to nodes of the DNN based upon the second set of seed radar data 112. The computer-implemented model 120, once trained, is configured to perforn a subtask with respect to autonomous navigation, such as object detection, object classification, object tracking, or other suitable subtask. Moreover, the computer-implemented model 120 can be trained with sensor data generated by autoencoders across numerous different domains, thereby allowing the computer-implemented model 120 to generalize well across multiple different domains. For instance, the computer-implemented model 120 can be trained based upon radar data associated with numerous different weather conditions, such that the computer-implemented model 120 can generate predictions regardless of weather conditions in which an AV is operating.

In another embodiment, the trainer module 118 can be configured to train multiple computer-implemented models, where each computer-implemented model corresponds to a different domain, and where an appropriate computer-implemented model can be selected for use when performing an autonomous navigation subtask depending upon the domain. For example, a first computer-implemented model can be trained based upon radar data associated with rainy conditions, while a second computer-implemented model can be trained based upon radar data associated with sunny conditions. During operation of the AV, an appropriate computer-implemented model is selected for performing an autonomous navigation subtask based upon a current observed weather condition.

The technologies described herein exhibit various technical advantages over conventional approaches for training a computer-implemented model that is configured to perform a subtask for autonomous navigation. As described previously, conventionally, when an AV is updated with a new model of a radar system, there is a lack of training data for a computer-implemented model that performs a subtask pertaining to autonomous navigation. Accordingly, the AV is often configured with a computer-implemented model that has been trained based upon radar data generated by a previous version of the radar system; hence, the computer-implemented model may generate outputs suboptimally (e.g., with suboptimal accuracy). Alternatively, deployment of the AV must be delayed while training data for the updated radar system is collected. In contrast, the technologies described herein allow for previously collected radar data to be transformed such that, in this example, the transformed radar data corresponds to the new model of the radar system. In addition, the technologies described herein allow for radar data generated in simulated environments to be transformed to correspond to the new model of the radar system. A computer-implemented model can then be trained using this transformed data, and the computer-implemented model can be employed in an AV that includes the new radar system to perform one or more autonomous navigation subtasks. As the new radar system generates radar data, the computer-implemented model can be retrained and updated based upon the generated radar data, resulting in overall improvement in performance of the autonomous navigation subtask.

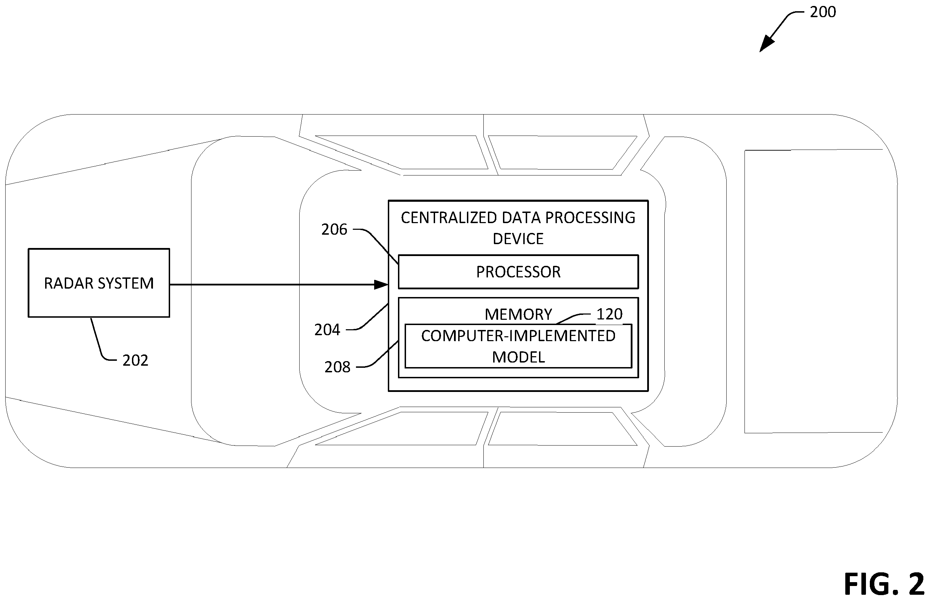

Referring now to Fig. 2, an AV 200 is illustrated. The AV 200 can be a level 5 fully autonomous AV. While illustrated as an automobile, it is to be understood that the AV 200 may be a truck, a motorcycle, a drone, or other suitable AV. The AV 200 includes a radar system 202. While not illustrated, the AV 200 may further include other sensor systems that output data that can be used in connection with autonomous navigation, such as a camera system, a lidar system, an ultra-sonic sensor system, an infrared sensor system, a global positioning system (GPS), an accelerometer, and/or other suitable sensor systems. The AV 200 further includes a centralized data processing device 204, where the radar system 202 is configured to transmit data to the centralized data processing device 204. While not illustrated, the AV 200 may also include a lidar sensor system. Further, while the radar system 202 is shown as being located at the front of the AV 200, with the centralized data processing device 204 being near a center of the AV 200, it is to be understood that the radar system 202 and the centralized data processing device 204 may be positioned at any suitable location within or upon the AV 200. In another example embodiment, the centralized data processing device 204 may be remote from the AV 200 and in communication with other electronic componentry of the AV 200 by way of a high speed connection.

The centralized data processing device 204 includes a processor 206 and memory 208, where the memory 208 includes the computer-implemented model 120 (where the computer-implemented model 120 has been trained by the trainer module 118). The computer-implemented model 120 includes functions that are executed by the processor 206, where radar data output by the radar system 202 is provided as input to the computer-implemented model 120. The radar system 202 generates data associated with a domain for which the computer-implemented model 120 has been trained (e.g., the radar system generates data associated with the domain of the second set of radar data 114).

In an embodiment, radar system 202 generates radar data associated with the surroundings of the AV 200. The computer-implemented model 120 receives the radar data (e.g., in the form of a point cloud, in the form of raw radar data, in the form of compressed radar data, etc.) generated by the radar system 202, and performs an autonomous navigation subtask based upon such radar data. As noted above, example autonomous navigation subtasks include, but are not limited to, object detection, object classification, and object tracking. Based upon output of the computer-implemented model 120, the centralized data processing device 204 controls mechanical systems of the AV 200 (such as a steering system, a braking system, and/or a propulsion system) such that the AV 200 performs a driving maneuver.

The radar system 202 may be any suitable type of radar system, such as a continuous wave (CW) radar system (including a frequency modulated continuous wave (FMCW) radar system or an unmodulated CW radar system) or a pulsed radar system. The centralized data processing device 204 can be or include a central processing unit (CPU), a graphical processing unit (GPU), a field-programmable gate array (FPGA), or any suitable combination of such computing devices. Further, the computer-implemented model 120 can be any suitable type of machine learning model, such as a DNN, a convolutional neural network, a recurrent neural network, a decision tree, etc.

It is also to be appreciated that while reference herein is made to domain adaptation being performed on radar data generated by a radar system, the same principles apply to sensor data generated by lidar systems, camera systems, or other sensor systems where domain gaps may be problematic.

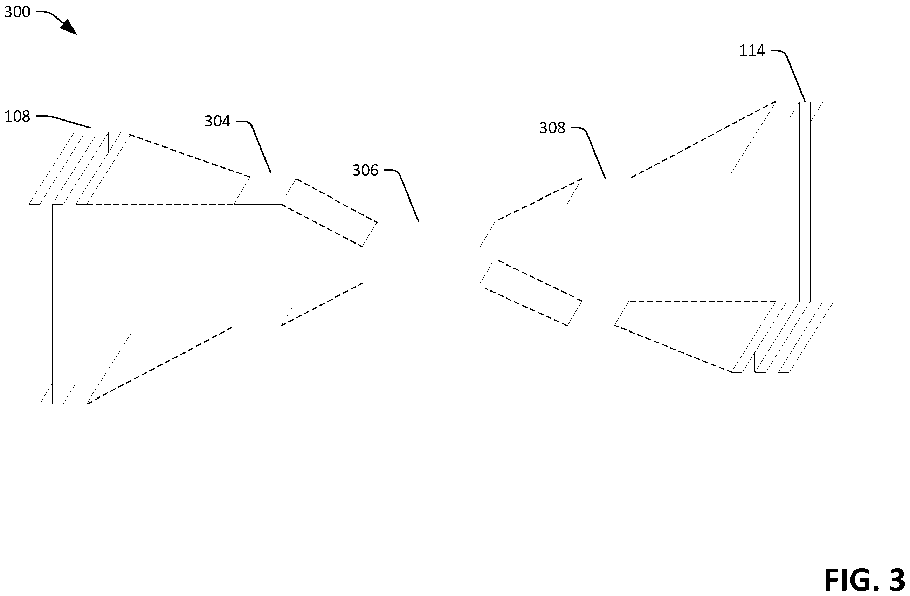

Turning now to FIG. 3, illustrated is a functional block diagram of an exemplary autoencoder 300 that performs domain adaptation of sensor data.

The autoencoder 300 can comprise both an encoder 304 and a decoder 308. The encoder 304 can receive the first set of radar data 108 associated with a first domain and encode the data into a latent space representation 306, which comprises functional attributes of the first set of radar data 108. The decoder 308 can decode the latent space representation 306 into the second set of radar data 114 associated with the second domain.

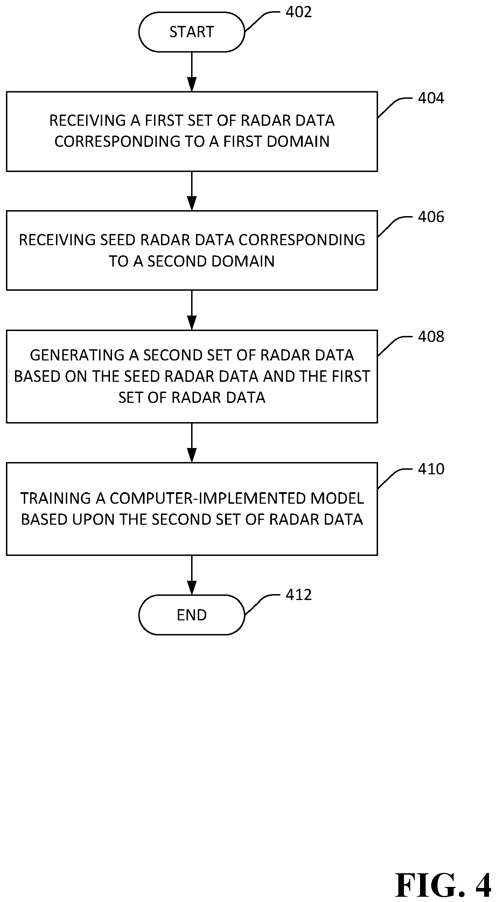

FIG. 4 illustrates an exemplary methodology 400 for performing domain adapaption on radar sensor data generated in the context of autonomous navigation. While the methodology 400 is shown as being a series of acts that are performed in a sequence, it is to be understood and appreciated that the methodology is not limited by the order of the sequence. For example, some acts can occur in a different order than what is described herein. In addition, an act can occur concurrently with another act. Further, in some instances, not all acts may be required to implement a methodology described herein.

Moreover, the acts described herein may be computer-executable instructions that can be implemented by one or more processors and/or stored on a computer-readable medium or media. The computer-executable instructions can include a routine, a sub-routine, programs, a thread of execution, and/or the like. Still further, results of acts of the methodologies can be stored in a computer-readable medium displayed on a display device, and/or the like.

The methodology 400 starts at 402, and at 404 a first set of radar data corresponding to a first domain is received. The first set of radar data can be generated by a first radar system mounted on an AV. In another example, the first set of radar data can be generated in a simulation environment, where operation of a radar system is simulated

At 406, seed radar data corresponding to a second domain is received. In an example, the seed sensor data can be generated by a second radar system that is different from the first radar system. In another example, the seed radar data can be generated by a radar system that has a different firmware version than the first radar system. In yet another example, the seed radar data can be generated by a second radar system that is a same model as the first radar system, but operating in a different radar mode. Other examples are contemplated.

At 408, a second set of radar data is generated based upon the seed radar data and the first set of radar data, where the second set of radar data corresponds to a second domain that is different from the first domain. At least in some embodiments, an autoencoder is configured to generate the second set of radar data based on the seed radar data and the first set of radar data. More specifically, the autoencoder can be trained based upon the seed radar data and radar sensor data that corresponds to the first domain.

At 410, a computer-implemented model is trained based upon the second set of radar data, and accordingly the computer-implemented model is trained with training data that corresponds to the second domain. Subsequent to being trained, the computer-implemented model can be installed in a computing system of an AV, where the computer-implemented model is configured to receive radar data generated by a radar system of the AV, and further where the AV is configured to perform driving maneuvers based upon outputs of the computer-implemented model. The methodology 400 completes at 412.

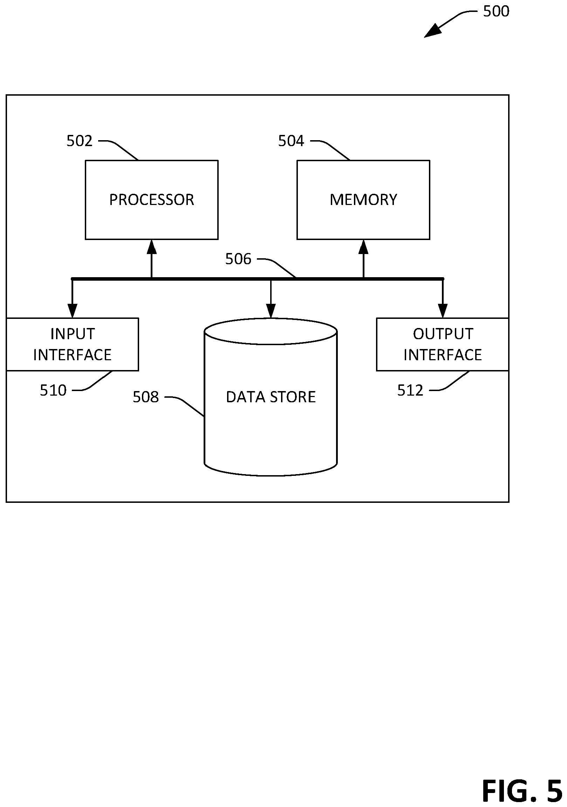

Referring now to Fig. 5, a high-level illustration of a computing device 500 that can be used in accordance with the systems and methodologies disclosed herein is illustrated. For instance, the computing device 500 may be used in a system that is configured to perform a driving maneuver based upon outputs of a computer-implemented model installed on the computing device 500. By way of another example, the computing device 500 can be used in a system that is configured to compute correction factors to use when correcting an image. The computing device 500 includes at least processor 502 that executes instructions that are stored in a memory 504. The instructions may be, for instance, instructions for implementing functionality described as being carried out by one or more components discussed above or instructions for implementing one or more of the methods described above. The processor 502 may access the memory 504 by way of a system bus 506. In addition to storing executable instructions, the memory 504 may also store radar data, images, etc.

The computing device 500 additionally includes a data store 508 that is accessible by the processor 502 by way of the system bus 506. The data store 508 may include executable instructions, images, raw sensor data, etc. The computing device 500 also includes an input interface 510 that allows external devices to communicate with the computing device 500. For instance, the input interface 510 may be used to receive instructions from an external computer device, from a user, etc. The computing device 500 also includes an output interface 512 that interfaces the computing device 500 with one or more external devices. For example, the computing device 500 may display text, images, etc. by way of the output interface 512.

Additionally, while illustrated as a single system, it is to be understood that the computing device 500 may be a distributed system. Thus, for instance, several devices may be in communication by way of a network connection and may collectively perform tasks described as being performed by the computing device 500.

Various functions described herein can be implemented in hardware, software, or any combination thereof. If implemented in software, the functions can be stored on or transmitted over as one or more instructions or code on a computer-readable medium. Computer-readable media includes computer-readable storage media. A computer-readable storage media can be any available storage media that can be accessed by a computer. By way of example, and not limitation, such computer-readable storage media can comprise RAM, ROM, EEPROM, CD-ROM or other optical disk storage, magnetic disk storage or other magnetic storage devices, or any other medium that can be used to carry or store desired program code in the form of instructions or data structures and that can be accessed by a computer. Disk and disc, as used herein, include compact disc (CD), laser disc, optical disc, digital versatile disc (DVD), floppy disk, and Blu-ray disc (BD), where disks usually reproduce data magnetically and discs usually reproduce data optically with lasers. Further, a propagated signal is not included within the scope of computer-readable storage media. Computer-readable media also includes communication media including any medium that facilitates transfer of a computer program from one place to another. A connection, for instance, can be a communication medium. For example, if the software is transmitted from a website, server, or other remote source using a coaxial cable, fiber optic cable, twisted pair, digital subscriber line (DSL), or wireless technologies such as infrared, radio, and microwave, then the coaxial cable, fiber optic cable, twisted pair, DSL, or wireless technologies such as infrared, radio and microwave are included in the definition of communication medium. Combinations of the above should also be included within the scope of computer-readable media.

Alternatively, or in addition, the functionally described herein can be performed, at least in part, by one or more hardware logic components. For example, and without limitation, illustrative types of hardware logic components that can be used include Field-programmable Gate Arrays (FPGAs), Program-specific Integrated Circuits (ASICs), Program-specific Standard Products (ASSPs), System-on-a-chip systems (SOCs), Complex Programmable Logic Devices (CPLDs), etc.

The features described herein relate to a computer architecture in an AV according to at least the examples provided below.

(A1) In one aspect, some embodiments include a computing system that has a processor and a memory that stores instructions that when executed by the processor cause the processor to perform acts. The acts include receiving a first set of sensor data corresponding to a first domain. The acts also include generating, by way of an autoencoder, a second set of sensor data based on the first set of sensor data, where the second set of sensor data corresponds to a second domain that is different from the first domain, and further wherein the autoencoder has been trained based upon seed sensor data that corresponds to the second domain. The actions also include training a computer-implemented model based upon the second set of sensor data, wherein the computer-implemented model, upon being trained, is installed in a computing system of an autonomous vehicle (AV), wherein the computer-implemented model is configured to receive sensor data generated by a sensor device on the AV and generate output based upon the received sensor data, wherein the AV autonomously performs a driving maneuver based upon the output of the computer-implemented model, and further wherein the sensor data corresponds to the second domain.

(A2) In some embodiments of the computer system of Al, the first set of sensor data is first radar data, the second set of sensor data is second radar data, and further wherein the seed data corresponds to a portion of the first set of sensor data.

(A3) In some embodiments of the computer system of at least one of A1-A2, the seed sensor data corresponds to a same scene as the portion of the first set of sensor data.

(A4) In some embodiments of the computer system of at least one of A1-A3, the first domain is associated with a first environmental condition, and the second domain is associated with a second environmental condition.

(A5) In some embodiments of the computer system of at least one of A1-A4, the first sensor data is generated by a first model of a radar system, and the seed sensor data is generated by a second model of the radar system that is different from the first model.

(A6) In some embodiments of the computer system of Al, the first set of sensor data is generated in a simulation environment and the seed sensor data is generated by a radar system.

(A7) In some embodiments of the computer system of at least one of A1-A6, the first domain corresponds to a first position of a radar system on a vehicle and the second domain corresponds to a second position of a radar system on a vehicle, wherein the first position and the second position are different.

(A8) In some embodiments of the computer system of at least one of A1-A6, the first set of sensor data is generated by radar systems having a first version of firmware, and the seed sensor data includes radar data generated by a radar system that has a second version of firmware that is different from the first version of firmware.

(B1) In another aspect, some embodiments include a method, where the method includes receiving a first set of sensor data corresponding to a first domain. The method also includes providing the first set of sensor data as input to an autoencoder. The method also includes generating, by way of the autoencoder, a second set of sensor data that corresponds to the first set of sensor data, wherein the second set of sensor data corresponds to a second domain that is different from the first domain, and further wherein the autoencoder was trained based upon seed data that corresponds to the second domain. The method also includes training a computer-implemented model based upon the second set of sensor data, wherein the computer-implemented model, upon being trained, is installed in a computing system of an autonomous vehicle (AV), wherein the computer-implemented model is configured to receive sensor data generated by a sensor device on the AV and generate output based upon the sensor data, wherein the AV autonomously performs a driving maneuver based upon the output from the computer-implemented model, and further wherein the sensor data corresponds to the second domain.

(B2) In some of the embodiments of the method of B1, the sensor device on the AV is a radar sensor.

(B3) In some of the embodiments of the method of at least one of B1 - B2, the seed data corresponds to a same scene as a portion of the first set of sensor data.

(B4) In some of the embodiments the method of at least one of B1 -B3, the first domain is associated with a first environmental condition and the second domain is associated with a second environmental condition.

(B5) In some of the embodiments of the methods of at least one of B1 - B4, the first set of sensor data is generated by radar systems of a first model, and the seed data includes data generated by a radar system of a second model.

(B6) In some of the embodiments of the method of at least one of B1 - B5, the computer-implemented model is a deep neural network.

(C1) In another aspect, some embodiments include a computer-readable storage medium comprising instructions that, when executed by a processor, cause the processor to perform acts. The acts include receiving a first set of sensor data corresponding to a first domain. The acts also include providing the first set of sensor data as input to an autoencoder. The acts also include generating, by way of the autoencoder, a second set of sensor data that corresponds to the first set of sensor data, wherein the second set of sensor data corresponds to a second domain that is different from the first domain, and further wherein the autoencoder was trained based upon seed data that corresponds to the second domain. The acts also include training a computer-implemented model based upon the second set of sensor data, wherein the computer-implemented model, upon being trained, is installed in a computing system of an autonomous vehicle (AV), wherein the computer-implemented model is configured to receive sensor data generated by a sensor device on the AV and generate output based upon the sensor data, wherein the AV autonomously performs a driving maneuver based upon the output from the computer-implemented model, and further wherein the sensor data corresponds to the second domain.

(C2) In some of the embodiments of the computer-readable storage medium of C1, the first set of sensor data is first radar data, the second set of sensor data is second radar data, and further wherein the seed data corresponds to a portion of the first set of sensor data.

(C3) In some of the embodiments of the computer-readable storage medium of at least one of C1-C2, the seed data corresponds to a same scene as the portion of the first set of sensor data.

(C4) In some of the embodiments of the computer-readable storage medium of at least one of C1-C4, the first domain is associated with a first environmental condition, and the second domain is associated with a second environmental condition.

(C5) In some of the embodiments of the computer-readable storage medium of at least one of C1-C5, the first sensor data is generated by a first model of a radar system, and the seed data is generated by a second model of the radar system that is different from the first model.

What has been described above includes examples of one or more embodiments. It is, of course, not possible to describe every conceivable modification and alteration of the above devices or methodologies for purposes of describing the aforementioned aspects, but one of ordinary skill in the art can recognize that many further modifications and permutations of various aspects are possible. Accordingly, the described aspects are intended to embrace all such alterations, modifications, and variations that fall within the spirit and scope of the appended claims. Furthermore, to the extent that the term "includes" is used in either the details description or the claims, such term is intended to be inclusive in a manner similar to the term "comprising" as "comprising" is interpreted when employed as a transitional word in a claim.

## Claims

1. A computing system, comprising:
a processor; and
memory that stores instructions that, when executed by the processor, cause the processor to perform acts comprising:
receiving a first set of sensor data corresponding to a first domain;
generating, by way of an autoencoder, a second set of sensor data based on the first set of sensor data, where the second set of sensor data corresponds to a second domain that is different from the first domain, and further wherein the autoencoder has been trained based upon seed sensor data that corresponds to the second domain; and
training a computer-implemented model based upon the second set of sensor data, wherein the computer-implemented model, upon being trained, is installed in a computing system of an autonomous vehicle (AV), wherein the computer-implemented model is configured to receive sensor data generated by a sensor device on the AV and generate output based upon the received sensor data, wherein the AV autonomously performs a driving maneuver based upon the output of the computer-implemented model, and further wherein the sensor data corresponds to the second domain.

2. The system of claim 1, wherein the first set of sensor data is first radar data, the second set of sensor data is second radar data, and further wherein the seed data corresponds to a portion of the first set of sensor data.

3. The system of claim 2, wherein the seed sensor data corresponds to a same scene as the portion of the first set of sensor data.

4. The system of any of claims 1-3, wherein the first domain is associated with a first environmental condition, and the second domain is associated with a second environmental condition.

5. The system of any of claims 1-4, wherein the first sensor data is generated by a first model of a radar system, and the seed sensor data is generated by a second model of the radar system that is different from the first model.

6. The system of claim 1, wherein the first set of sensor data is generated in a simulation environment and the seed sensor data is generated by a radar system.

7. The system of at least one of claims 1-6, wherein the first domain corresponds to a first position of a radar system on a vehicle and the second domain corresponds to a second position of a radar system on a vehicle, wherein the first position and the second position are different.

8. The system of any of claim 1, wherein the first sensor data is generated by radar systems having a first version of firmware, and the seed sensor data includes radar data generated by a a radar system that has a second version of firmware that is different from the first version of firmware.

9. A method, comprising:
receiving a first set of sensor data corresponding to a first domain;
providing the first set of sensor data as input to an autoencoder;
generating, by way of the autoencoder, a second set of sensor data that corresponds to the first set of sensor data, wherein the second set of sensor data corresponds to a second domain that is different from the first domain, and further wherein the autoencoder was trained based upon seed data that corresponds to the second domain; and
training a computer-implemented model based upon the second set of sensor data, wherein the computer-implemented model, upon being trained, is installed in a computing system of an autonomous vehicle (AV), wherein the computer-implemented model is configured to receive sensor data generated by a sensor device on the AV and generate output based upon the sensor data, wherein the AV autonomously performs a driving maneuver based upon the output from the computer-implemented model, and further wherein the sensor data corresponds to the second domain.

10. The method of claim 9, wherein the sensor device on the AV is a radar sensor.

11. The method of at least one of claims 9-10, wherein the seed data corresponds to a same scene as a portion of the first set of sensor data.

12. The method of at least one of claims 9-11, wherein the first domain is associated with a first environmental condition and the second domain is associated with a second environmental condition.

13. The method of at least one of claims 9-12, wherein the first set of sensor data is generated by radar systems of a first model, and the seed data includes data generated by a radar system of a second model.

14. The method of at least one of claims 9-12, wherein the first set of sensor data is simulation data generated in a simulation environment by a simulated radar system, and the seed data includes radar data generated by a radar system mounted to a vehicle.

15. The method of claim 9, wherein the computer-implemented model is a deep neural network.

## Amended claims

### Amended claims in accordance with Rule 137(2) EPC.

1. A computing system (100), comprising:
a processor (102); and
memory (104) that stores instructions that, when executed by the processor (102), cause the processor (102) to perform acts comprising:
receiving a first set of sensor data corresponding to a first domain;
generating, by way of an autoencoder (116), a second set of sensor data based on the first set of sensor data, where the second set of sensor data corresponds to a second domain that is different from the first domain, and further wherein the autoencoder (116) has been trained based upon seed sensor data that corresponds to the second domain; and
training a computer-implemented model based upon the second set of sensor data, wherein the computer-implemented model, upon being trained, is installed in a computing system of an autonomous vehicle AV(200), wherein the computer-implemented model is configured to receive sensor data generated by a sensor device on the AV (200) and generate output based upon the received sensor data, wherein the AV (200) autonomously performs a driving maneuver based upon the output of the computer-implemented model, and further wherein the sensor data corresponds to the second domain.

2. The system of claim 1, wherein the first set of sensor data is first radar data, the second set of sensor data is second radar data, and further wherein the seed sensor data corresponds to a portion of the first set of sensor data.

3. The system of claim 2, wherein the seed sensor data corresponds to a same scene as the portion of the first set of sensor data.

4. The system of any of claims 1-3, wherein the first domain is associated with a first environmental condition, and the second domain is associated with a second environmental condition.

5. The system of any of claims 1-4, wherein the first sensor data is generated by a first model of a radar system, and the seed sensor data is generated by a second model of the radar system that is different from the first model.

6. The system of claim 1, wherein the first set of sensor data is generated in a simulation environment and the seed sensor data is generated by a radar system.

7. The system of at least one of claims 1-6, wherein the first domain corresponds to a first position of a radar system on a vehicle and the second domain corresponds to a second position of a radar system on a vehicle, wherein the first position and the second position are different.

8. The system of any of claim 1, wherein the first sensor data is generated by radar systems having a first version of firmware, and the seed sensor data includes radar data generated by a radar system that has a second version of firmware that is different from the first version of firmware.

9. A method, comprising:
receiving a first set of sensor data corresponding to a first domain;
providing the first set of sensor data as input to an autoencoder (116);
generating, by way of the autoencoder (116), a second set of sensor data that corresponds to the first set of sensor data, wherein the second set of sensor data corresponds to a second domain that is different from the first domain, and further wherein the autoencoder (116) was trained based upon seed data that corresponds to the second domain; and
training a computer-implemented model based upon the second set of sensor data, wherein the computer-implemented model, upon being trained, is installed in a computing system of an autonomous vehicle AV (200), wherein the computer-implemented model is configured to receive sensor data generated by a sensor device on the AV (200) and generate output based upon the sensor data, wherein the AV (200) autonomously performs a driving maneuver based upon the output from the computer-implemented model, and further wherein the sensor data corresponds to the second domain.

10. The method of claim 9, wherein the sensor device on the AV (200) is a radar sensor.

11. The method of at least one of claims 9-10, wherein the seed data corresponds to a same scene as a portion of the first set of sensor data.

12. The method of at least one of claims 9-11, wherein the first domain is associated with a first environmental condition and the second domain is associated with a second environmental condition.

13. The method of at least one of claims 9-12, wherein the first set of sensor data is generated by radar systems of a first model, and the seed data includes data generated by a radar system of a second model.

14. The method of at least one of claims 9-12, wherein the first set of sensor data is simulation data generated in a simulation environment by a simulated radar system, and the seed data includes radar data generated by a radar system mounted to a vehicle.

15. The method of claim 9, wherein the computer-implemented model is a deep neural network.
